# FASCICULE DE BREVET EUROPEEN

(11) **EP 0 506 986 B1**
(45) Date de publication et mention de la délivrance du brevet: **11.01.1995**
(21) Numéro de dépôt: 91105119.1
(22) Date de dépôt: 30.03.1991
(51) Int. Cl.: A01J 25/11, A01J 25/16

(54) **Plateau réversible empilable pour la fabrication des fromages**
Stapelbare und umkehrbare Platte zur Herstellung von Käse
Stackable and reversible tray for the manufacture of cheese

(43) Date de publication de la demande: 07.10.1992
(73) Titulaire: SOCIETE DES PRODUITS NESTLE S.A., 1800 Vevey (CH)
(72) Inventeur: Prella, Giovanni, Vercelli (IT); Zugni, Roberto, I-20081 Abbiategrasso (MI) (IT)

(56) Documents cités:
- EP-A- 229 868
- EP-A- 235 675
- FR-A- 1 595 911
- FR-A- 2 443 199
- SE-A- 201 060

## Description

La présente invention concerne un plateau réversible pour la fabrication des fromages, utilisable avec d'autres plateaux similaires pour former un empilement encadrant des blocs-moules et des stores.

Les fromages du type a pâte molle et à pâte demi-cuite non pressée peuvent être fabriqués de manière mécanisée par la mise en oeuvre de blocs-moules répartiteurs de caillé perforés sans fond ni couvercle posés sur des toiles filtrantes dites "stores" reposant eux-mêmes sur des plateaux. Les ensembles ainsi constitués peuvent être superposés pour former des piles comprenant par exemple jusqu'à 10 plateaux posées par exemple sur un chariot, ce qui facilite la manutention et économise la surface au sol utilisée pendant l'égouttage du caillé.

Les ensembles précédents doivent pouvoir être retournés pour conduire à un égouttage uniforme, ce qui se fait généralement manuellement, plateau par plateau. D'autre part, à la fin de l'opération d'égouttage on procède à un salage, par exemple en saumure et il serait souhaitable que les ensembles puissent être traités en piles par immersion dans un bain de saumure. De plus, une fois le salage effectué, l'affinage nécessite encore plusieurs retournements avec changements ou retraits successifs des stores, qu'il serait avantageux d'effectuer également en bloc sans démantèlement des piles.

La demande de brevet publiée EP 0235.675 concerne un plateau double face portant un store sur chaque face, empilable avec des blocs-moules et d'autres plateaux similaires, destiné à la mécanisation des opérations d'égouttage et permettant le lavage des plateaux avec les stores. Avec ce dispositif, la rigidité d'une pile de plateaux et blocs-moules n'est pas garantie car ce ne sont pas les plateaux qui sont porteurs mais des pattes extérieurs fixées aux coins des blocs-moules. Par ailleurs, la constitution des piles n'est pas très commode car les pattes des blocs-moules doivent s'insérer dans des fentes correspondantes des plateaux. De plus, les stores ne sont pas amovibles, ce qui rend peu flexible l'utilisation des plateaux en cave d'affinage. Enfin, la structure des plateaux est compliquée ce qui ne facilite pas leur nettoyage.

Le but de la présente invention est de fournir un plateau permettant la mécanisation de l'égouttage et du salage tout en facilitant l'affinage des fromages par une manutention en piles.

A cet effet, le plateau selon l'invention est caractérisé par le fait qu'il comprend
une plaque servant de support de bloc-moule,
un cadre entourant extérieurement la plaque dont deux côtés opposés sont percés de fenêtres et,
des stores amovibles sans démantèlement de l'empilement, disposés contre les faces supérieure et inférieure de la plaque et, qu'une fois empilés, les plateaux reposent les uns sur les autres par les côtés des cadres et sont maintenus superposés par emboîtement autour des blocs-moules.

De préférence, les stores sont maintenus contre les faces de la plaque dans des rainures ménagées dans l'épaisseur des parois intérieures des côtés du cadre munis de fenêtres. Ainsi, les stores, d'une seule pièce peuvent coulisser dans les rainures et être enlevés ou mis en place sans avoir à défaire ou refaire une pile de plateaux.

Dans un ensemble de plateau, store et bloc-moule, la plaque du plateau est fixée de préférence à environ mihauteur des côtés du cadre et la hauteur de ces côtés correspond environ au double de la hauteur des blocs-moules. Ceci ménage un espace entre un bloc-moule et le store inférieur associé au plateau situé au-dessus.

Un bloc-moule comporte des rangées et des lignes de moules. La plaque d'un plateau est avantageusement perforée entre les rangées et/ou les lignes de moules du bloc-moule pour faciliter l'égouttage. Les fenêtres ménagées dans les côtés du cadre du plateau sont avantageusement de forme allongée et situées en face des rangées de moules du bloc-moule.

Ces ouvertures et espaces permettent une bonne ventilation des plateaux, ce qui crée une atmosphère homogène au sein d'une pile lors de l'affinage ainsi qu'une circulation de la saumure sans chemin préférentiel lors du salage en immersion.

la description qui suit illustre à titre d'exemple un mode de réalisation de l'invention en référence au dessin annexé dans lequel:
la figure 1 est une vue en perspective d'un plateau réversible pour la fabrication de fromages, sans les stores,
la figure 2 est une vue en coupe transversale de ce plateau avec les stores, suivant 1-1 de la figure 3,
la figure 3 est une vue en coupe longitudinale du même plateau suivant 2-2 de la figure 2 et
la figure 4 est une vue schématique en coupe verticale partielle d'une pile de plateaux, stores et blocs-moules utilisant les plateaux de la figure 1.

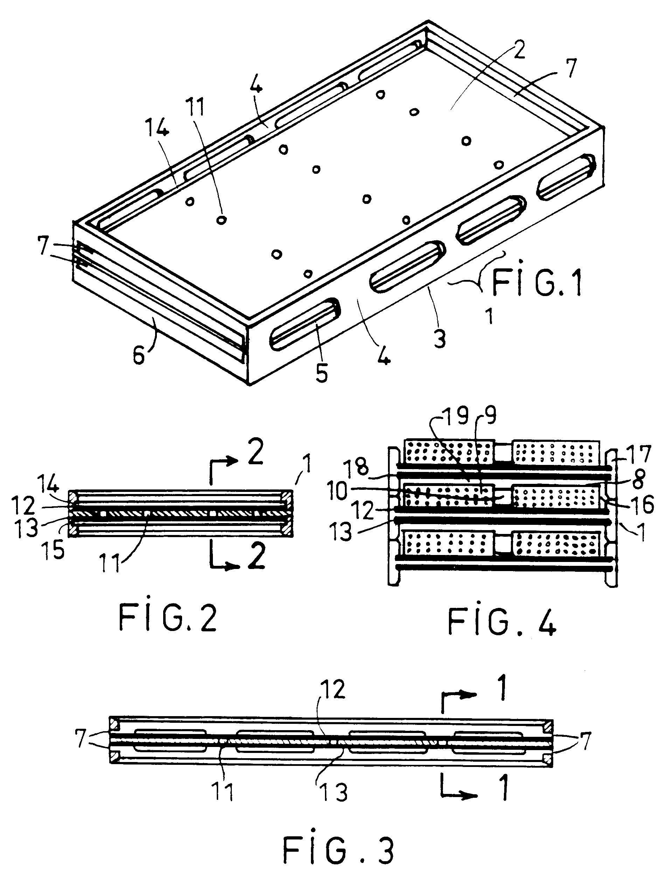

Le plateau 1 comprend une plaque rectangulaire 2 et un cadre 3 entourant la plaque. Les grands côtés 4 du cadre sont percés de fenêtres oblongues 5, disposées en quelque sorte "à cheval" sur la plaque 2. Dans les petits côtés 6 du cadre sont ménagées des fentes 7 de part et d'autre de la plaque 2.
La plaque 2 est prévue pour supporter un bloc-moule 8 perforé sans fond ni couvercle comprenant huit moules 9 de forme carrée disposés en deux lignes et quatre rangées reliés entre eux par des entretoises 10. La plaque 2 est perforée de trous d'écoulement 11 entre les rangées de moules.
Comme montré aux figures 2 et 3, des stores d'une seule pièce 12,13 sont maintenus contre les faces supérieure et inférieure de la plaque 2 dans des rainures 14,15 ménagées dans l'épaisseur des faces intérieures des grands côtés 4 du cadre 3 tout le long de ces côtés. Les stores 12,13 sont amovibles et peuvent être mis en place ou enlevés par les fentes 7 en coulissant dans les rainures 14,15. L'ensemble du plateau 1 et des stores 12,13 est symétrique par rapport à la plaque 2 et est de ce fait réversible.

Comme montré à la figure 4, pour former une pile de plateaux réversibles, chaque plateau 1 est muni d'un store supérieur 12 et d'un store inférieur 13. Un bloc-moule 8 est placé sur le store 12 et s'insère dans le cadre du plateau avec un certain jeu 16. Le bloc-moule reçoit huit fromages en cours de fabrication, un par moule 9. Sur chaque ensemble ainsi constitué est posé le plateau 17 immédiatement supérieur qui s'emboîte sur le bloc-moule associé au premier plateau. Etant donné le faible jeu 16, le cadre du plateau 17 repose sur le cadre du plateau 1 ce qui assure une bonne stabilité à la pile qui peut être ainsi constituée très facilement. De plus, les plateaux ne reposant pas sur les blocs-moules comprenant un assemblage de moules perforés de parois plus minces reliés entre eux par des ponts de matière, mais directement sur les autres plateaux par leur cadres de parois plus épaisses et de construction assurant une bonne rigidité, il n'y a pas de risque de déformation des plateaux dans la pile ni de la pile elle-même lors des différentes opérations de manutention.

Pour le retournement, il est bien entendu nécessaire de placer un dernier moule vide, mais avec son store inférieur, sur le haut de la pile.

En retournant la pile de plateaux, de stores et de blocs-moules ainsi constituée, on fait reposer par exemple le bloc-moule 8 sur le plateau 17 qui devient le plateau immédiatement inférieur. Les fromages contenus dans les moules 9 du bloc-moule 8 se retrouvent ainsi posés sur le store 18, c'est-à-dire sur une surface support identique à celle précédant le retournement. Le store 12 se trouve libéré de toute charge et peut donc être enlevé pour être nettoyé, par exemple lors de l'opération d'affinage, puis être ensuite remis en place en vue d'accueillir le bloc-moule et les fromages lors du prochain retournement ou encore être retiré si l'on désire poursuivre l'affinage sans stores. On voit ainsi que l'affinage peut être effectué en piles, sans démantèlement ni reconstitution des piles à chaque retournement.

Lors de l'opération d'égouttage, le drainage et la ventilation sont assurés par les ouvertures 5,7 et 11. Pour le salage, par exemple par immersion des piles dans un bain de saumure, les ouvertures 5 et 7 ainsi que l'espace 19 (figure 4) situé entre le bord supérieur des blocs-moules 8 et le store 18 permettent une bonne circulation de la saumure entre les fromages et par suite des conditions de salage uniforme.

Les plateaux, blocs-moules et stores sont de préférence en matière plastique. Une fois l'affinage terminé, après avoir enlevé les moules et les fromages, les différents éléments peuvent être nettoyés et éventuellement stérilisés de manière automatique.

## Revendications

1. Plateau réversible pour la fabrication de fromages, utilisable avec d'autres plateaux similaires pour former un empilement encadrant des blocs-moules et des stores, caractérisé par le fait qu'il comprend
une plaque servant de support de bloc-moule,
un cadre entourant extérieurement la plaque dont deux côtés opposés sont percés de fenêtres et,
des stores amovibles sans démantèlement de l'empilement, disposés contre les faces supérieure et inférieure de la plaque et, qu'une fois empilés,
les plateaux reposent les uns sur les autres par les côtés des cadres et sont maintenus superposés par emboîtement autour des blocs-moules.

2. Plateau selon la revendication 1, caractérisé par le fait que les stores sont maintenus contre les faces de la plaque dans des rainures ménagées dans l'épaisseur des parois intérieures des côtés du cadre munis de fenêtres et peuvent coulisser dans ces rainures.

3. Plateau selon la revendication 1, caractérisé par le fait que la plaque est fixée au cadre environ à mihauteur de ses côtés.

4. Plateau selon la revendication 3, caractérisé par le fait que la hauteur des côtés du cadre correspond environ au double de la hauteur des blocs-moules.

5. Plateau selon la revendication 1, caractérisé par le fait que la plaque est perforée entre les rangées et/ou les lignes des moules du bloc-moule.

6. Plateau selon la revendication 1, caractérisé par le fait que les fenêtres ménagées dans les côtés du cadre sont de forme allongée et situées en face des rangées de moules des bloc-moules.

## Claims

1. A reversible tray for the production of cheeses which can be used with other similar trays to form a stack enclosing block moulds and stores, characterized in that it comprises
a plate designed to support the block mould,
a frame externally surrounding the plate of which two opposite sides are formed with slots and
stores which can be detached without dismantling of the stack and which are arranged on the upper and lower faces of the plate and, after stacking, the trays rest on one another through the sides of the frames and are kept superposed by nesting around the block moulds.

2. A tray as claimed in claim 1, characterized in that the stores are held on the faces of the plate in grooves formed in the thickness of the inner walls of the sides of the frame provided with slots and are designed to slide in those grooves.

3. A tray as claimed in claim 1, characterized in that the plate is fixed to the sides of the frame at approximately mid-height.

4. A tray as claimed in claim 3, characterized in that the height of the sides of the frame corresponds to approximately twice the height of the block moulds.

5. A tray as claimed in claim 1, characterized in that the plate is perforated between the rows and/or the lines of moulds of the block mould.

6. A tray as claimed in claim 1, characterized in that the slots formed in the sides of the frame are elongate in shape and are situated opposite the rows of moulds of the block moulds.

## Patentansprüche

1. Umkehrbare Platte für die Käseherstellung, die mit anderen gleichartigen Platten zur Bildung eines Formenblöcke und Stores umrahmenden Stapels verwendbar ist, dadurch gekennzeichnet, daß sie eine als Träger für einen Formenblock dienende Tafel, einen die Tafel außen umgebenden Rahmen, dessen beide entgegengesetzten Seiten mit Öffnungen versehen sind, und Stores umfaßt, die ohne Abbau des Stapels abnehmbar sind und an der Oberseite und an der Unterseite der Tafel angeordnet sind, und daß die Platten nach Stapelung mit den Seiten der Rahmen aufeinander aufliegen und durch Aufstecken auf die Formenblöcke übereinander gehalten sind.

2. Platte nach Anspruch 1, dadurch gekennzeichnet, daß die Stores an den Flächen der Tafel in Nuten gehalten sind, die in der Dicke der Innenwände der mit Öffnungen versehenen Seiten des Rahmens ausgespart sind, und in diesen Nuten gleiten können.

3. Platte nach Anspruch 1, dadurch gekennzeichnet, daß die Tafel am Rahmen etwa in halber Höhe seiner Seiten befestigt ist.

4. Platte nach Anspruch 3, dadurch gekennzeichnet, daß die Höhe der Seiten des Rahmens etwa dem Zweifachen der Höhe der Formenblöcke entspricht.

5. Platte nach Anspruch 1, dadurch gekennzeichnet, daß die Tafel zwischen den Formenreihen und/oder -zeilen des Formenblocks perforiert ist.

6. Platte nach Anspruch 1, dadurch gekennzeichnet, daß die in den Seiten des Rahmens vorgesehenen Öffnungen von länglicher Form sind und gegenüber den Formenreihen des Formenblocks angeordnet sind.
